# FASCICULE DE BREVET EUROPEEN

(11) **EP 0 402 193 B1**
(45) Date de publication et mention de la délivrance du brevet: **24.02.1993**
(21) Numéro de dépôt: 90401408.1
(22) Date de dépôt: 28.05.1990
(51) Int. Cl.: G01T 7/04, G01T 1/178

(54) **Procédé et dispositif de mesure de la concentration des différents isotopes du radon dans une atmosphère gazeuse**
Verfahren und Vorrichtung zur Messung der Konzentration verschiedener Radon-Isotope in einer gasförmigen Atmosphäre
Method and apparatus for measuring the isotropic radon gas concentration in the atmosphere

(30) Priorité: 30.05.1989 FR 8907109
(43) Date de publication de la demande: 12.12.1990
(73) Titulaire: COMMISSARIAT A L'ENERGIE ATOMIQUE, 75015 Paris Cédex 15 (FR)
(72) Inventeur: Guelin, Michel, F-91640 Briis Sous Forges (FR); Le Gac, Jacqueline, F-78320 Le Mesnil St Denis (FR); Charuau, Jean, F-91940 Les Ulis (FR)
(74) Mandataire: Mongrédien, André

(56) Documents cités:
- EP-A- 0 280 416
- US-A- 3 922 555
- US-A- 3 953 737

## Description

La présente invention se rapporte d'une manière générale à la mesure de l'activité volumique d'une atmosphère contenant du gaz radon présent sous ses différentes variétés isotopiques Rₙ²²², Rₙ²²⁰ et Rₙ²¹⁹ ainsi que leurs descendants naturels émetteurs α et ß , ces derniers s'accompagnent d'un rayonnement γ et dont on sait que, dans des conditions normales, ils sont à l'état solide.

Les méthodes actuellement connues pour analyser l'activité d'un échantillon gazeux contenant les différents isotopes du radon et leurs descendants se rattachent à deux grandes catégories, mais aucune des deux ne permet d'effectuer cette mesure de façon discriminatoire, c'est-à-dire en attribuant à chaque isotope et à ses descendants propres, la part d'activité qui leur revient dans l'échantillon d'atmosphère gazeuse étudiée.

Les méthodes de mesure connues de l'activité des atomes de radon, qui sont, comme on vient de le rappeler, des mesures globales non discriminatoires, reposent essentiellement sur deux principes physiques différents, à savoir :
1) l'ionisation de l'air produite dans une chambre à circulation, par les rayonnements émis par les isotopes du radon et leurs descendants ;
2) l'action des particules α émises par les descendants du radon sur une surface rendue sensible à cet effet.

Aucune de ces deux méthodes ne permet d'accéder facilement et de façon précise à la détermination de la répartition isotopique des différents radons Rₙ²²², Rₙ²²⁰ et Rₙ²¹⁹. En effet :

Dans les mesures qui utilisent la méthode de l'ionisation de l'air, cette ionisation est évaluée à l'aide du courant qu'elle crée entre l'armature conductrice d'une chambre d'ionisation cylindrique et l'électrode axiale entre lesquelles on applique une différence de potentiel appropriée. L'inconvénient principal de cette méthode est que l'on travaille sur un courant qui est le résultat de l'ionisation de l'air ambiant par tous les émetteurs radioactifs contenus dans l'échantillon prélevé. Or, pour une activité volumique donnée d'un certain échantillon d'atmosphère, le courant d'ionisation varie avec l'énergie du rayonnement qui a provoqué l'ionisation. Comme, par définition, on ne connaît pas la répartition isotopique des différents radons, la mesure de l'activité volumique est entachée d'incertitude.

Dans les méthodes qui utilisent l'interaction des particules sur une surface sensible, la mesure de l'activité volumique du radon se fait souvent au moyen de fioles scintillantes préalablement mises sous vide. Ces fioles sont des récipients en verre dont la paroi interne, à l'exception du fond, est revêtue de matière scintillante telle que le sulfure de zinc activé à l'argent. Le gaz correspondant à l'atmosphère à analyser est alors introduit à travers le bouchon de la fiole par l'intermédiaire d'une aiguille hypodermique.

La mesure elle-même n'est faite qu'après un certain temps de mise à l'équilibre du radon avec ses différents descendants solides, ceux-ci s'étant alors fixés sur les parois du récipient. L'interaction de particules α avec la matière scintillante par ces mêmes descendants solides produit des photons qui sont pris en compte et mesurés par un photomultiplicateur placé sous le fond de la fiole pour être ensuite analysés par un système électronique adapté. Cette technique de pratique courante dans les laboratoires présente elle aussi deux inconvénients importants à savoir :
- D'une part elle ne permet pas plus que la précédente, de dissocier les activités respectives des isotopes Rₙ²²², Rₙ²²⁰ et Rₙ²¹⁹ du radon, puisque les impulsions des trois filiations isotopiques ne peuvent pas être discriminées par le photomultiplicateur.
- D'autre part, pour aboutir à la valeur de l'activité volumique des isotopes du radon, on doit supposer que les produits de filiation solides se répartissent de façon homogène sur la paroi interne de la fiole pour réaliser une géométrie de mesure de cette activité reproductible d'une expérience à l'autre. Ceci introduit une incertitude complémentaire sur la mesure de l'activité volumique des isotopes du radon.

La présente invention a précisément pour objet, un procédé et un dispositif de mesure de la concentration des différents isotopes du radon en équilibre dans une atmosphère gazeuse qui remédie d'une façon simple et efficace aux inconvénients précédemment rappelés des méthodes de l'art antérieur.

Le procédé de mesure de la concentration dans une atmosphère gazeuse des différents isotopes du radon, tels que notamment le Rₙ²²², le Rₙ²²⁰ et le Rₙ²¹⁹, se caractérise en ce qu'il consiste à collecter et à répartir de façon homogène, dans un espace fermé de prélèvement contenant un échantillon de cette atmosphère, les descendants solides de ces isotopes et à effectuer de l'extérieur de cet espace, une spectrométrie des rayonnements γ qu'ils émettent.

En d'autres termes, le procédé objet de l'invention améliore les procédés de l'art antérieur en effectuant une mesure de spectrométrie γ sur les descendants solides des trois isotopes du radon, après les avoir répartis de manière homogène dans un volume de prélèvement fermé que l'on examine depuis l'extérieur avec une chaîne de spectrométrie γ . La chaîne de spectrométrie utilisée dans le cadre du procédé objet de l'invention, analyse donc une répartition volumique homogène des descendants solides d'une atmosphère gazeuse dans laquelle se trouvent en équilibre les isotopes du radon et leurs différents descendants. Comme l'énergie des rayonnements γ des descendants est bien répertoriée par les physiciens, la chaîne de spectrométrie γ permet d'attribuer, sans aucune erreur d'identité, la part d'activité qui revient à chacun des isotopes du radon.

La présente invention a également pour objet un dispositif pour la mise en oeuvre du procédé de mesure précédent, qui se caractérise en ce qu'il est constitué d'un récipient muni d'une tubulure d'admission et d'une tubulure d'évacuation pour l'atmosphère gazeuse et dont l'intérieur, formant l'espace fermé de prélèvement, est subdivisé en un grand nombre de petits volumes élémentaires identiques communiquant entre eux pour permettre l'homogénéisation de l'échantillon gazeux prélevé ainsi que la diffusion et le piègeage spatialement homogène de tous les descendants solides, constituant ainsi une source volumique émettrice γ homogène pour la chaîne de spectrométrie γ qui examine cette source de l'extérieur.

Comme on peut le remarquer facilement, l'idée inventive de base qui a conduit à la construction de ce nouveau dispositif, consiste à subdiviser le volume de prélèvement de l'atmosphère à analyser en un grand nombre de petits volumes élémentaires identiques dans lesquels on piège les descendants solides sur la surface la plus étendue possible. Bien entendu, ces petits volumes contigus ne doivent pas faire obstacle à l'écoulement du gaz ni à la diffusion des atomes solides des descendants dans le volume de prélèvement et c'est la raison pour laquelle ils doivent communiquer entre eux.

Selon une caractéristique préférentielle de l'invention, il est utile de constituer les surfaces de délimitation des petits volumes élémentaires précédents à l'aide de matériaux conducteurs de l'électricité afin de permettre l'écoulement des charges électriques et d'éviter une hétérogénéité du dépôt des atomes solides qui pourrait résulter de l'apparition de forces électrostatiques à l'intérieur du volume de prélèvement.

Dans un mode de mise en oeuvre particulièrement intéressant de la présente invention, la subdivision de l'intérieur du récipient en un grand nombre de petits volumes élémentaires identiques communiquant entre eux est réalisée par une structure multicouche de matériaux à texture ajourée. Comme il a été indiqué, ces grilles sont avantageusement bonnes conductrices des charges électriques, ce pour quoi on les réalise sous forme métallique et de préférence en aluminium afin d'atténuer le moins possible le rayonnement γ . Dans une structure de ce genre, les volumes ou alvéoles élémentaires sont constitués chacun de deux prismes superposés ayant une base commune et des arêtes opposées à angle droit.

On peut également, sans sortir du cadre de la présente invention, réaliser la subdivision de l'intérieur du récipient en petits volumes élémentaires communiquant entre eux par tout autre moyen à la portée de l'homme de métier tel que par exemple l'utilisation d'une structure à plusieurs disques plans perforés disposés parallèlement au fond du récipient et tenus à distance constante par des entretoises, ou encore par une plaque métallique enroulée sous la forme d'une spirale, avec espacement à chaque tour, et disposée selon l'axe de révolution d'un récipient en forme de cylindre de révolution, ou encore par un empilement de microbilles métalliques, en verre, ou en polymère tel que le polystyrène.

De toute façon, l'invention sera mieux comprise en se référant à la description qui suit, d'un exemple de mise en oeuvre qui sera décrit à titre surtout illustratif et non limitatif en se référant aux figures 1 à 4 ci-jointes, sur lesquelles :
- La fig. 1 est une coupe selon l'axe d'un récipient équipé de deux familles de grilles pliées en accordéon à angle droit selon l'invention ;
- la fig. 2 représente schématiquement la façon dont sont superposées les grilles de chaque étage de l'empilement ;
- la fig. 3 montre le dispositif de la fig. 1 équipée de sa chaîne de mesure de spectrométrie γ;
- la fig. 4 montre une variante possible de la forme du récipient constituant le dispositif, objet de l'invention.

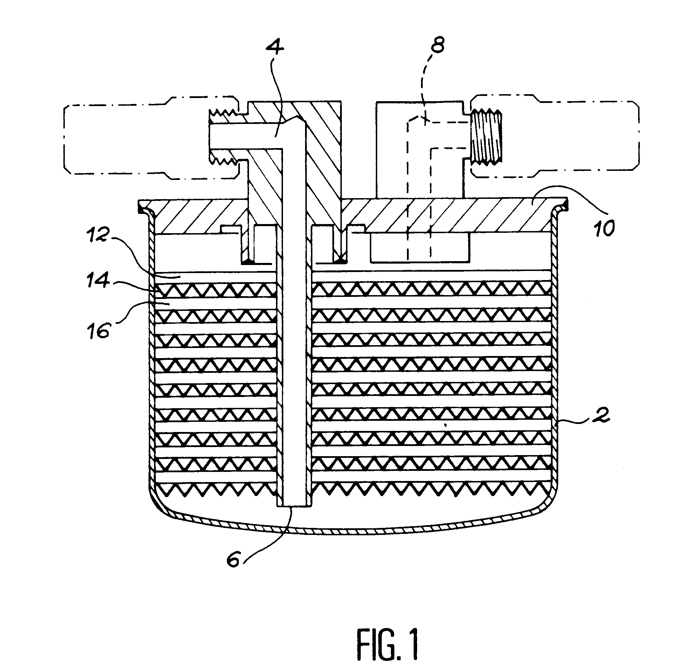

Sur la figure 1, on a représenté en coupe un dispositif selon l'invention pour la mesure de la concentration des différents isotopes du radon. Ce dispositif comporte essentiellement un récipient 2 muni d'une tubulure d'entrée 4 débouchant en 6 au voisinage du fond du récipient 2 et une tubulure de sortie 8, pour introduire à l'intérieur du récipient 2, l'échantillon d'atmosphère à examiner. Un couvercle 10 ferme le récipient 2 de façon étanche à sa partie supérieure.

Selon l'invention, le récipient comporte dans sa partie intérieure un empilement d'étages tels que 12, 14, 16 etc... de microgrilles métalliques plissées en forme d'accordéon, ces microgrilles ayant leur direction de plissage à angle droit d'un étage à l'autre comme on le voit sur les trois étages référencés 12, 14 et 16 par exemple.

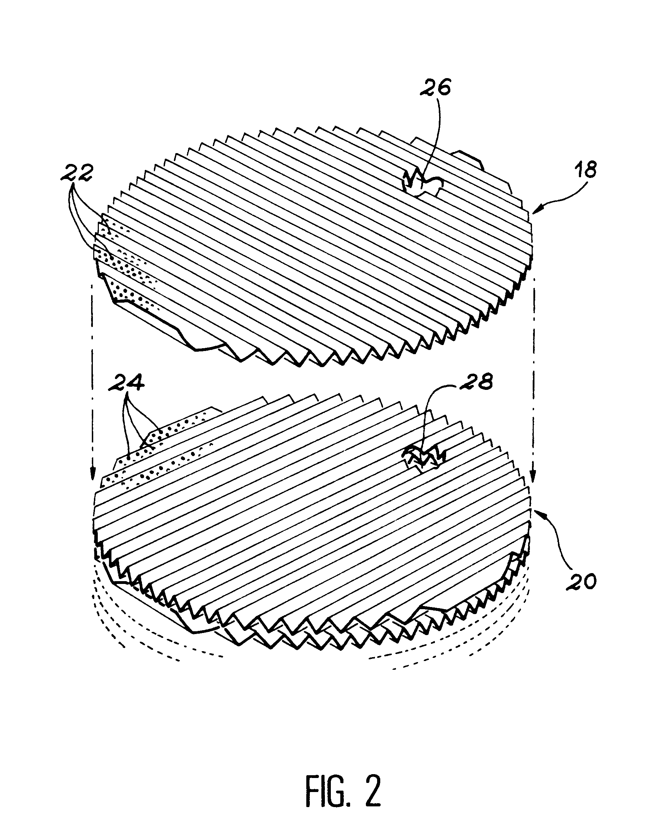

La figure 2 montre schématiquement l'empilement des étages précédents dont deux seulement, à savoir respectivement, l'étage 18 et l'étage 20 ont été représentés et possèdent des directions de plissage à angle droit. On a également fait figurer partiellement en 22 et 24, les perforations des grilles métalliques constituant les feuilles plissées. Pour permettre la pénétration, au travers du système des grilles, de la tubulure d'admission 4, se trouvent découpés dans chacune d'entre elles, des orifices tels que 26 et 28, lesquels sont situés dans le prolongement les uns des autres lorsque l'empilement est réalisé dans le boîtier 2.

A titre d'exemple, on peut constituer couramment le récipient 2 à l'aide d'un conteneur d'un volume d'environ 500 cm³ et constituer les différentes microgrilles 18, 20 en aluminium sous forme de microgrilles obtenues par déploiement réalisé par la société METAL DEPLOYE.

A titre d'indication également, les microgrilles précédentes peuvent avoir une épaisseur d'environ 0,25 mm, une transparence frontale de 23% et un diamètre des trous de 0,35 mm. Le nombre d'étages dans l'exemple de la figure 1 est de 18, les microgrilles plissées étant empilées de façon successive avec une rotation de 90° d'un étage à l'autre. L'agencement précédent conduit à réaliser ainsi plusieurs milliers d'alvéoles ayant la forme d'un volume délimité par deux prismes ayant une base commune et dont le volume unitaire est voisin de 5.10⁻² cm³.

Par ailleurs, la surface de dépôt initial des descendants solides du radon se trouve, du fait de l'agencement interne en étages du conteneur 2, multipliée par un facteur supérieur à 10. Quant au matériau d'aluminium utilisé, il n'occupe qu'environ 10% du volume interne du récipient 2. Grâce à la faible épaisseur des grilles et à la densité du matériau choisi, l'atténuation du rayonnement γ provenant du dépôt est négligeable.

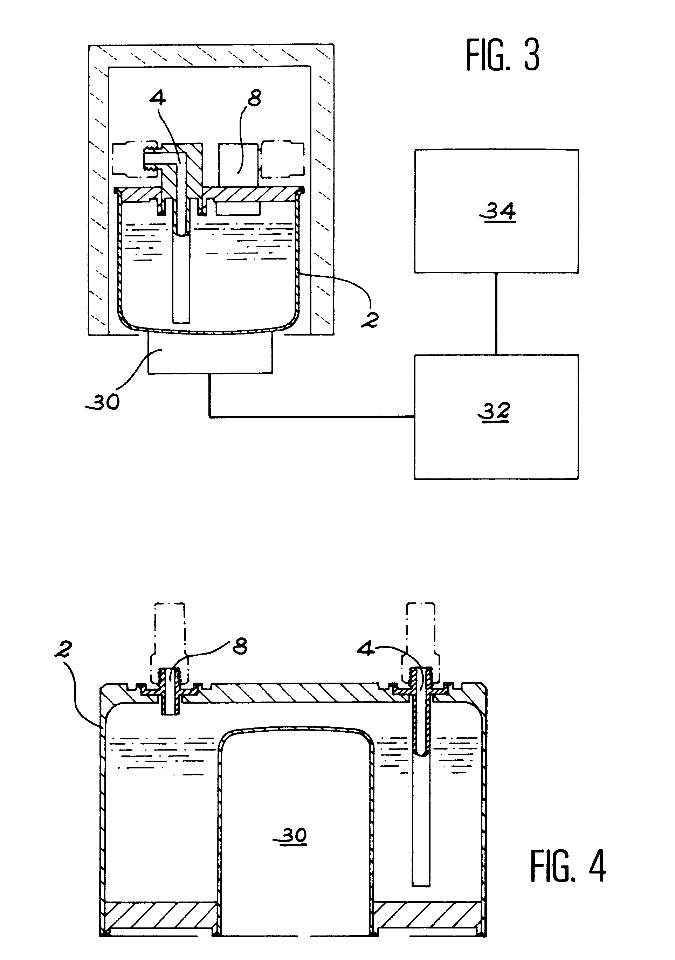

Sur la figure 3, on a représenté sous forme schématique le dispositif selon l'invention dans sa forme complète qui associe le récipient 2 supposé rempli des grilles plissées non totalement représentées, à une chaîne de spectrométrie γ complète comportant un détecteur 30, une électronique associée 32 et un analyseur multicanaux 34. Dans la réalisation de la figure 3, le détecteur examine par conséquent l'activité volumique de l'intérieur du conteneur 2 au travers du fond de ce conteneur.

Pour utiliser le dispositif de la fig. 3, ou tout autre variante de celui-ci, on commence par ouvrir les tubulures 4 et 8 pour remplir le récipient 2 par un échantillon de l'atmosphère gazeuse à étudier, puis on ferme ces deux mêmes tubulures. On laisse s'écouler alors le temps suffisant, par exemple trois heures, pour que l'équilibre radioactif s'établisse entre les différents descendants des isotopes radioactifs du radon et que les particules solides les composant se répartissent de façon homogène dans tout le volume du récipient 2 au travers des petits volumes élémentaires. On peut alors faire la mesure de l'activité γ à l'aide de la chaîne 30, 32, 34.

Dans une autre variante de mise en oeuvre également possible de l'invention, que l'on décrira maintenant en se référant à la figure 4, le conteneur 2, toujours équipé de ses grilles non complètement représentées, est constitué sous une forme annulaire avec un emplacement central pour le détecteur 30. L'homme de métier saura choisir dans chaque cas particulier en fonction des résultats qu'il souhaite obtenir, la forme du conteneur 2 et l'emplacement du détecteur 30 par rapport au volume dans lequel on mesure l'activité γ volumique.

Bien entendu et ainsi qu'on l'a déjà précisé précédemment, d'autres systèmes ou dispositifs de remplissage du conteneur 2 sont envisageables, tels que par exemple des matériaux stratifiés à multicouches ayant une texture ajourée, par exemple des disques plans perforés, ou également des spirales obtenues à partir de l'enroulement d'une plaque métallique, ou des empilements de billes.

Pour les besoins de la cause, la chaîne de spectrométrie γ doit être étalonnée, pour la géométrie du volume de prélèvement utilisé et pour le spectre en énergie gamma correspondant aux descendants du radon. De manière pratique, on peut faire remplir le volume de prélèvement par le Laboratoire de Métrologie des Rayonnements Ionisants (référencé au Bureau National de Métrologie) avec un mélange de gaz radioactifs multigamma de krypton 85 et de xénon 127.

## Revendications

1. Procédé de mesure de la concentration dans une atmosphère gazeuse des différents isotopes du radon, tels que notamment le Rₙ²²², le Rₙ²²⁰ et le Rₙ²¹⁹, caractérisé en ce qu'il consiste à collecter et à répartir de façon homogène dans un espace fermé de prélèvement contenant un échantillon de cette atmosphère, les descendants solides de ces isotopes et à effectuer, de l'extérieur de cet espace, une spectrométrie des rayonnements γ qu'ils émettent.

2. Dispositif pour la mise en oeuvre du procédé selon la revendication 1, caractérisé en ce qu'il est constitué d'un récipient (2) muni d'une tubulure d'admission (4) et d'une tubulure d'évacuation (8) pour l'atmosphère gazeuse et dont l'intérieur, formant l'espace fermé de prélèvement, est subdivisé en un grand nombre de petits volumes élémentaires communiquant entre eux pour permettre l'homogénéisation de l'échantillon gazeux prélevé ainsi que la diffusion et le piègeage spatialement homogène de tous les descendants solides, constituant ainsi une source volumique émettrice γ homogène pour la chaîne de spectrométrie γ qui examine cette source de l'extérieur.

3. Dispositif selon la revendication 2, caractérisé en ce que la subdivision de l'intérieur du récipient en un grand nombre de petits volumes élémentaires identiques communiquant entre eux est réalisée par empilement d'étages (12,14,16) de microgrilles métalliques d'aluminium plissées en forme d'accordéon (18,20) et dont la direction de plissage est à angle droit d'un étage à l'autre.

4. Dispositif selon la revendication 2, caractérisé en ce que la subdivision de l'intérieur du récipient en un grand nombre de petits volumes élémentaires communiquant entre eux est réalisée par une structure multicouches de matériaux à texture ajourée.

5. Dispositif selon la revendication 2, caractérisé en ce que la subdivision de l'intérieur du récipient est réalisée par l'enroulement d'une plaque métallique sous forme d'une spirale.

6. Dispositif selon la revendication 2, caractérisé en ceque la subdivision de l'intérieur du récipient est réalisée par un remplissage de microbilles.

7. Dispositif selon l'une quelconque des revendications 2 à 6 caractérisé en ce que le matériau utilisé pour la structure de remplissage est conducteur électrique.

## Patentansprüche

1. Verfahren zum Messen der Konzentration von verschiedenen Radonisotopen, wie insbesondere von Rn²²², Rn²²⁰ und Rn²¹⁹ in einer gasförmigen Atmosphäre, dadurch gekennzeichnet, daß es darin besteht, in einem geschlossenen Probenentnahmeraum, der eine Probe dieser Atmosphäre enthält, die festen Tochterprodukte dieser Isotope zu sammeln und homogen zu verteilen und von außerhalb dieses Raumes eine Spektrometrie der γ-Strahlen, die sie aussenden, durchzuführen.

2. Vorrichtung zum Ausführen des Verfahrens nach Anspruch 1, dadurch gekennzeichnet, daß es aus einem Behälter (2) besteht, der mit einer Einlaßröhre (4) und einer Auslaßröhre (8) für die gasförmige Atmosphäre versehen ist und dessen Inneres, das den geschlossenen Probenentnahmeraum bildet, in eine große Zahl von kleinen Elementarvolumen unterteilt ist, die miteinander in Verbindung stehen, um die Homogenisierung der entnommenen, gasförmigen Probe ebenso wie die Diffusion und das räumlich homogene Einfangen aller festen Tochterprodukte zu ermöglichen, und somit eine γ-Strahlen emittierende, homogene Volumenquelle für die γ-Spektrometriekette, die diese quelle von außen untersucht, bildet.

3. Vorrichtung nach Anspruch 2, dadurch gekennzeichnet, daß die Unterteilung des Inneren des Behälters in eine große Anzahl von kleinen identischen, miteinander in Verbindung stehenden Elementarvolumen erreicht wird durch das Übereinandersetzen von Etagen (12, 14, 16) von metallischen Mikrogittern aus in Akkordeonform gefaltetem Aluminium (18, 20), deren Faltungswinkel von einer Etage zu nächsten im rechten Winkel zueinander stehen.

4. Vorrichtung nach Anspruch 2, dadurch gekennzeichnet, daß die Unterteilung des Inneren des Behälters in eine große Anzahl von kleinen identischen, miteinander in Verbindung stehenden Elementarvolumen erreicht wird durch eine Mehrschichtstruktur aus einem Material mit einer durchbrochenen Textur.

5. Vorrichtung nach Anspruch 2, dadurch gekennzeichnet, daß die Unterteilung des Inneren des Behälters durch Aufrollen einer metallischen Platte in Spiralform erreicht wird.

6. Vorrichtung nach Anspruch 2, dadurch gekennzeichnet, daß die Unterteilung des Inneren des Behälters durch Auffüllen mit Mikrokugeln erreicht wird.

7. Vorrichtung nach einem der Ansprüche 2 bis 6, dadurch gekennzeichnet, daß das für die Füllstruktur verwendete Material elektrisch leitend ist.

## Claims

1. Method to measure the concentration in a gaseous atmosphere of the various isotopes of radon, such as Rₙ²²², Rₙ²²⁰ and Rₙ²¹⁹, characterized in that it consists of collecting and homogeneously distributing in a closed sampling space containing a sample of this atmosphere the solid daughter products of these isotopes and of carrying out outside this space a spectrometry of the radiations γ they emit.

2. Device to implement the method according to claim 1, characterized in that it is constituted by a vessel (2) provided with an intake tube (4) and an evacuation tube (8) for the gaseous atmosphere and whose inside forming the closed sampling space, said device being subdivided into a large number of small intercommunicating elementary volumes so as to allow for homogenization of the taken gaseous sample, as well as to allow for the spatially and homogeneous diffusion and trapping of all the solid daughter products, thus constituting a homogeneous γ emitting volume source for the γ spectrometric chain which examines this source from the outside.

3. Device according to claim 2, characterized in that the subdivision of the inside of the vessel into a large number of intercommunicating identical elementary small volumes is embodied by stacking stages (12, 14, 16) of metal aluminium microgrids pleated into the shape of an accordion (18, 20) and whose pleating direction is at a right angle from one stage to another.

4. Device according to claim 2, characterized in that the subdivision of the inside of the vessel into a large number of small intercommunicating elementary volumes is embodied by a multilayer structure consisting of open-worked materials.

5. Device according to claim 2, characterized in that the subdivision of the inside of the vessel is embodied by the winding of a spiral-shaped metal plate.

6. Device according to claim 2, characterized in that the subdivision of the inside of the vessel is embodied by a filling with microballs.

7. Device according to any one of claims 2 to 6, characterized in that the material used for the filling structure is an electric conductor.
